# EUROPÄISCHE PATENTANMELDUNG

(11) **EP 0 889 534 A1**
(43) Veröffentlichungstag der Anmeldung: **07.01.1999**
(21) Anmeldenummer: 98112217.9
(22) Anmeldetag: 02.07.1998
(51) Int. Cl.: H01L 31/045, B64G 1/44

(54) **Getriebe zur Bewegung von mit Solarzellen versehenen Paneelen an einem Raumfahrzeug**

(30) Priorität: 05.07.1997 DE 19728844
(71) Anmelder: Daimler-Benz Aerospace Aktiengesellschaft, 81663 München (DE)
(72) Erfinder: Meurer, René, 83620 Vagen (DE); Gietl, Albert, 83098 Brannenburg (DE); Reindl, Markus, 85221 Dachau (DE)
(74) Vertreter: Hummel, Adam

(57) **Zusammenfassung**

Ein Getriebe zum Auffalten der ziehharmonikaartig gefalteten Solarzellenpaneele (3 bis 7) an einem Raumfahrzeug (1) weist an den Gelenken (9 bis 14) Seilscheiben (22 bis 27) auf, die paarweise von endlosen Drahtseilen (29 bis 33) umschlungen werden. Zur Anpassung seiner Längenänderung bei Temperaturänderung an die Längenänderung der Paneele (3 bis 7) und zur Erhöhung seiner Dehnsteifigkeit ist das Drahtseil (29 bis 33) außerhalb des Bereichs der Seilscheiben (22 bis 27) mit einem mit ihm fest verbundenen Kunststoffmantel (47, 48) versehen.

## Beschreibung

Die Erfindung bezieht sich auf ein Seilgetriebe zur Bewegung von an einem Raumfahrzeug mit Scharniergelenken ziehharmonikaartig gefalteten, mit Solarzellen versehenen Paneelen nach dem Oberbegriff des Anspruchs 1.

Derartige Seilgetriebe sind bekannt (vgl. z. B. DE-PS 2 021 580). Damit werden die im allgemeinen zwei Ausleger entfaltet, die die Solargeneratoren des Raumfahrzeuges bilden. Zur Entfaltung der Ausleger müssen die Bewegungsabläufe der einzelnen Solarpaneelen mit den Seilgetrieben synchronisiert werden, damit z.B. der Schwerpunkt jedes Auslegers beim Entfalten sich auf einer vorgegebenen Bahn bewegt und die Einzelteile des Auslegers mit kontrollierten Bewegungen in die entfaltete Position gelangen.

Die exakte Synchronisiation der Bewegungsabläufe der Solarpaneelen beim Entfalten der Ausleger ist jedoch mit Schwierigkeiten verbunden. So treten während der Entfaltung hohe Zugkräfte am Drahtseil auf, die zu einer Dehnung des Seiles führen. Zudem sind die Drahtseile gegenüber der Temperatur, bei der das Getriebe montiert wird, unter Weltraum-Betriebsbedingungen Temperaturschwankungen von ca. ± 100°K ausgesetzt. Da das Drahtseil einen größeren Wärmeausdehungskoeffizienten besitzt als die beispielsweise als kohlefaserverstärkte Kunststoffsandwichs ausgebildeten Paneele, tritt bei hohen Temperaturen eine Erschlaffung des Drahtseiles auf. Um dies zu verhindern, muß die Vorspannung des Drahtseiles zusätzlich erhöht werden. Damit wirken bei niedrigen Temperaturen sehr hohe Zugkräfte auf die Seilscheiben, die zu einer hohen Belastung der Scharniergelenke und der Solarpaneele führen können, sowie die Reibung in den Scharniergelenken beträchtlich erhöhen können.

Um trotz der stark schwankenden Betriebstemperaturen eine definierte Vorspannung der Drahtseile sicherzustellen, ist es bekannt, in die Drahtseile Zugfedern einzubauen. Damit wird jedoch ein neues Problem geschaffen.

Der Antrieb für den Entfaltvorgang wird beispielsweise durch Triebfedern zwischen den Paneelen gebildet, die einerseits an der Seilscheibe und andererseits an der Paneele, an der die Seilscheibe drehbar gelagert ist, angreifen. Damit die Paneele beim Entfaltungsvorgang durch diese Triebfedern nicht unkontrolliert nach außen schnellen, sondern mit einer vorgegebenen Geschwindigkeit aufgeklappt werden, wird im allgemeinen die Drehbewegung des innersten Scharniergelenks, also des Scharniergelenks, mit dem das sogenannte Joch mit dem Raumfahrzeug verbunden ist, z. B. mit einem selbsthemmenden Getriebe gebremst oder bei Bedarf angetrieben. Durch die Seilgetriebe soll diese vorgegebene Drehgeschwindigkeit des innersten Gelenks dann auf die übrigen Scharniergelenke übertragen werden.

Dies ist jedoch nicht möglich, wenn die Drahtseile mit Zugfedern versehen sind. Denn die Zugfedern führen dann zu einem unkontrolliertem Ein- und Ausfedern der einzelnen Paneele beim Entfalten.

Da die Paneele jedes Auslegers in der ausgefalteten Endstellung in einer Ebene liegen, sind im allgemeinen entsprechende Arretierungen vorgesehen, die automatisch einschnappen, wenn die Endstellung erreicht ist. Durch das unkontrollierte Ausfedern aufgrund der Zugfedern in den Seilen der Seilgetriebe kann es damit sogar zu einem vorzeitigen Einschnappen der Arretierung zwischen zwei Paneelen kommen, was zu einem völlig unkontrollierten Entfaltungsvorgang führt.

Aufgabe der Erfindung ist es, ein Seilgetriebe der im Oberbegriff des Anspruchs 1 angegebenen Art bereitzustellen, mit dem die Bewegungsabläufe der einzelnen Solarpaneele jedes Auslegers des Raumfahrzeuges synchronisiert werden können.

Dies wird erfindungsgemäß mit dem im Anspruch 1 gekennzeichneten Getriebe erreicht. In den Unteransprüchen sind vorteilhafte Ausgestaltungen der Erfindung wiedergegeben.

Erfindungsgemäß werden also wenigstens einer, vorzugsweise jedoch beide geraden Abschnitte des endlosen Drahtseiles zwischen zwei Seilscheiben, die das Drahtseil umschlingt, mit einem Kunststoffmantel versehen, der mit dem Drahtseil fest verbunden ist, beispielsweise durch Kleben. Die Drahtseilabschnitte, die um die Seilscheiben gelegt und daran befestigt sind, sind nicht mit dem Kunststoffmantel bedeckt, um die Biegsamkeit des Drahtseiles in diesem Bereich nicht zu beeinträchtigen.

Durch die hohe Steifigkeit des Kunststoffmantels wird die Dehnsteifigkeit des Drahtseiles wesentlich erhöht, wodurch einer Dehnung des Seiles durch die hohen Zugkräfte bei der Entfaltung der Paneele begegnet wird. Da die erfindungsgemäße Längenänderung des Drahtseiles durch den Kunststoffmantel an die Längenänderung der Paneele bei einer Temperaturerhöhung angepasst ist, bleibt zugleich die vorgegebene Spannung des Drahtseiles im wesentlichen erhalten. Damit ist eine exakte Synchronisierung des Entfaltungsvorgangs durch die Seilgetriebe gewährleistet.

Zudem entspricht erfindungsgemäß durch den Kunststoffmantel die Längenänderung des Drahtseiles bei Temperaturherabsetzung der Längenänderung der Paneele. Damit wird sowohl einer Beanspruchung der Scharniergelenke und der Paneele als auch einer Erhöhung der Reibkräfte in den Scharniergelenken durch hohe Zugkräfte bei tiefen Betriebstemperaturen entgegengetreten.

Durch die hohe Dehnsteifigkeit der an ihren geraden Abschnitten mit einem Kunststoffmantel versehenen Drahtseile, wird zugleich ein unkontrolliertes Hin- und Herfedern der Paneele beim Entfaltungsvorgang verhindert.

Das Drahtseil kann, wie üblich, ein Stahlseil, insbesondere aus einer nicht rostenden Stahllegierung sein. Der Kunststoff, mit dem das Drahtseil ummantelt ist, kann ein Epoxidharz sein. Vorzugsweise ist der Kunststoffmantel faserverstärkt. Als Verstärkungsfasern werden insbesondere, auch aus Gewichtsgründen, Kohlefasern verwendet, oder beispielsweise Aramid-Fasern. Die Paneele und das Joch können, wie üblich, aus kohlfaserverstärktem Kunststoff bestehen.

Der Wärmeausdehnungskoeffizient der Paneele liegt im allgemeinen zwischen -1 x 10⁻⁶ und + 4 x 10⁻⁶ 1/K, der Wärmeausdehnungskoeffizient des Stahlseils bei 14 bis 17 x 10⁻⁶ 1/K. Die Länge einer Paneele und damit des geraden Abschnitts des Seiles kann beispielsweise zwischen 1 bis 4 Meter und mehr betragen.

Um bei Temperaturänderung eine Anpassung der Längenänderung des Drahtseiles an die Längenänderung der Paneele zu erreichen, wird für den Kunststoffmantel ein Kunststoff mit einem Ausdehnungskoeffizienten verwendet, der annähernd dem Ausdehnungskoeffizienten der Paneele entspricht. Da die thermische Längenänderung des kunststoffummantelten Abschnitts des Stahlseiles von dem Seilquerschnitt und der Querschnittsfläche des Kunststoffmantels abhängt, ist zudem die thermische Längenänderung durch die Querschnittsfläche des Kunststoffmantels einstellbar.

Darüber hinaus hängt die thermische Längenänderung, also Längenänderung bei Temperaturänderung von der Orientierung der Verstärkungsfasern im Kunststoffmantel ab, so daß der Winkel der Verstärkungsfasern zur Seillängsachse einen weiteren Parameter zur Einstellung der Längenänderung des Drahtseiles in Abhängigkeit von der Temperatur bildet.

Einen weiteren Parameter zur Einstellung der thermischen Längenänderung des Drahtseiles bildet das Verhältnis von ummantelter und nicht ummantelter Seillänge.

Die Dehnsteifigkeit des kunststoffummantelten Drahtseilabschnitts ist einerseits von dem Elastizitätsmodul und andererseits von der Querschnittsfläche des Kunststoffmantels abhängig. Einen wesentlichen Einfluß auf die Dehnsteifigkeit haben zudem die Verstärkungsfasern. So besitzen Kohlefasern eine hohe Dehnsteifigkeit bei geringer Dichte. Auch ist ihr Wärmeausdehnungskoeffizient gering. Um die Dehnsteifigkeit der Verstärkungsfasern voll zum Tragen zu bringen, sind sie Vorzugsweise im wesentlichen parallel zur Drahtseillängsachse orientiert.

Zur Herstellung des Kunststoffmantels können z. B. mit Epoxidharz getränkte Kohlefaser-Rovings vorzugsweise in Längsrichtung auf das Seil aufgetragen und aushärten gelassen werden. Beim Aushärten des Epoxidharzes wird zugleich eine feste Klebeverbindung zwischen dem Kunststoffmantel und dem Drahtseil hergestellt. Im gleichen oder in einem separaten Fertigungsschritt kann zusätzlich ein Schutzmantel für die Kohlefaser-Rovings aus faserverstärktem Kunststoff angebracht werden.

Die feste Verbindung zwischen dem Kunststoffmantel und dem Drahtseil stellt eine Voraussetzung für das erfindungsgemäße Seilgetriebe dar. Durch die starke Wechseltemperaturbeanspruchung während des Betriebs ist diese Verbindung erheblichen Belastungen ausgesetzt.

Die Festigkeit der Verbindung zwischen dem Kunststoffmantel und dem Drahtseil läßt sich dadurch erhöhen, daß der Kunststoffmantel an seinen Enden verjüngt ausgebildet wird. Dadurch paßt sich die Wärmeausdehnung des Kunststoffmantels im Bereich der Verjüngung der Wärmeausdehnung des Drahtseiles an, mit der Folge, daß die Kräfte zwischen dem Drahtseil und dem Kunststoffmantel vermindert und so eine Zerstörung der Verklebung an den Endbereichen des Mantels sicher verhindert wird.

Die Dehnsteifigkeit des kunststoffummantelten Abschnitts des Drahtseiles beträgt vorzugsweise mehr als das Doppelte, insbeondere mindestens das Vierfache des Drahtseiles selbst. Da das Drahtseil andererseits beim Entfaltungsvorgang eine gewisse, wenn auch geringe Federwirkung besitzen soll, wird eine Dehnsteifigkeit zwischen dem Vier- und Zehnfachen des Drahtseiles selbst vorgezogen.

Zwar ist es denkbar, die geraden Abschnitte des Drahtseiles ganz durch massive Kunststoffstäbe zu ersetzen, in denen die um die Seilscheiben geführten Drahtseilabschnitte verankert sind. Abgesehen von den Schwierigkeiten der Verankerung der Drahtseilabschnitte in den Kunststoffstäben, gewährleistet die erfindungsgemäße Kunststoffummantelung der Drahtseile jedoch eine Redundanz des endlosen Drahtseiles gegen Bruch der Einzelelemente im geraden Bereich des Drahtseiles sowie gegen Bruch des Kunststoffmantels.

Das nachstehende Ausführungsbeispiel dient zur weiteren Erläuterung der Erfindung:

### Beispiel:

Das Seil eines herkömmlichen Seilgetriebes zur Entfaltung von Solarpaneelen wird mit einem Epoxidharz, in dem Kohlefasern in Seillängsrichtung angeordnet, ummantelt. Das aus nicht rostendem Stahl bestehende Seil weist einen Durchmesser von 1,6 mm und der Mantel einen Außendurchmesser von 5 mm auf. Der Wärmeausdehnungskoeffizient des kunststoffummantelten Abschnittes des Drahtseiles wurde mit 0,4 x 10⁻⁶ 1/K bestimmt.

Nachstehend ist eine Ausführungsform des erfindungsgemäßen Seilgetriebes anhand der Zeichnung näher erläutert. Darin zeigen jeweils schematisch:
- Figur 1: eine Draufsicht auf den Solarzellenausleger eines Raumfahrzeuges am Beginn des Entfaltungsvorgangs;
- Figur 2: eine Seitenansicht eines Abschnitts des Auslegers nach Figur 1; und
- Figur 3: einen Abschnitt des Drahtseiles mit zum Teil weggeschnittenem Kunststoffmantel in perspektivischer Wiedergabe.

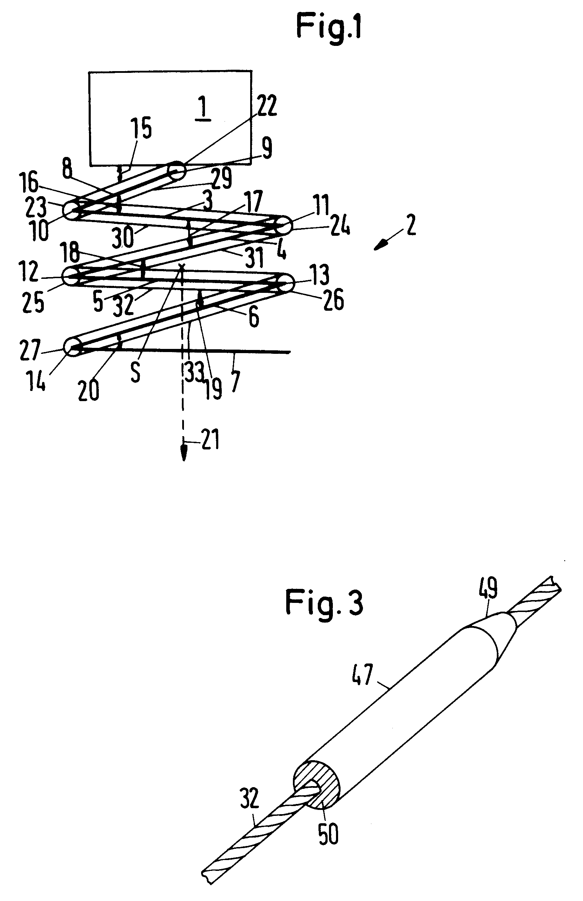

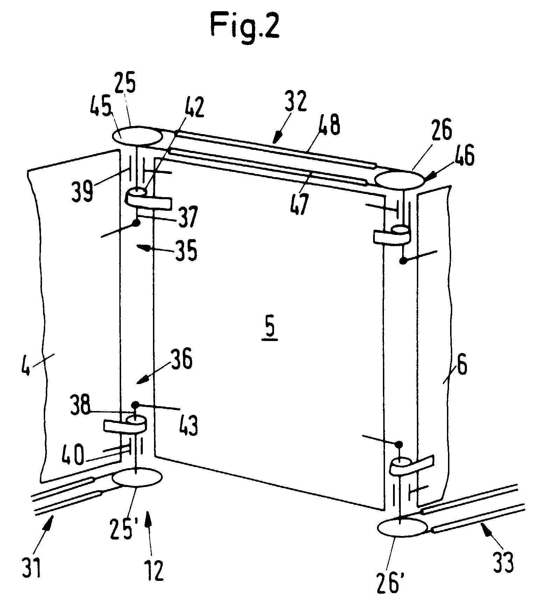

Gemäß Figur 1 ist an einem Raumfahrzeug, z.B. einem Satelliten 1 ein Solarzellenausleger 2 ziehharmonikaartig gefaltet angeordnet. Der zweite, identisch aufgebaute Solarzellenausleger, der auf der gegenüberliegenden Seite des Satelliten 1 angeordnet ist, ist in Figur 1 nicht dargestellt. Jeder der beiden Solarzellenausleger weist z.B. fünf Paneele 3 bis 7 auf, die die Trägerflächen für die nicht dargestellten Solarzellen bilden. Das innerste Paneel 3 wird über ein Scharniergelenk 10 mit dem sogenannten Joch 8 verbunden, welches über ein Scharniergelenk 9 am Satelliten 1 befestigt ist. Die Paneele 3 bis 7 sind untereinander durch die Scharniergelenke 11 bis 14 verbunden. Die Achsen der Scharniergelenke 9 bis 14 verlaufen parallel zueinander. Die Scharniergelenke 12 und 13 zwischen den Paneelen 4, 5 und 6 sind in Figur 2 näher dargestellt.

Um den Solarzellenausleger 2 zu entfalten, ist ein Antrieb wie z.B. Triebfedern vorgesehen, mit dem das Joch 8 von dem Satelliten 1, das Paneel 3 von dem Joch 8 und die Paneele 4 bis 7 voneinander wegbelastet werden, wie durch die Doppelpfeile 15 bis 19 in Figur 1 dargestellt. Damit sich bei der Entfaltung der Schwerpunkt S des Auslegers 2 auf der vorgegebenen, geraden Bahn 21 bewegt, ist ein Seilgetriebe vorgesehen, das aus oberen Seilscheiben 22 bis 27 und unteren Seilscheiben an den Scharniergelenken 9 bis 14 besteht, wobei von den unteren Seilscheiben die Seilscheiben 25' und 26' in Figur 2 zu sehen sind. Die oberen und unteren Seilscheiben 22 bis 27; 25', 26' sind paarweise durch Seile 29 bis 33 verbunden. Die endlos ausgebildeten Seile 29 bis 33 umschlingen das betreffende Paar von Seilscheiben, und sind, wie in Figur 2 dargestellt, an den Stellen 45, 46 fest mit den Seilscheiben 25, 26 verbunden.

Wie anhand des Scharniergelenks 12 in Figur 2 veranschaulicht, besteht jedes Scharniergelenk aus zwei Scharnieren 35, 36, mit jeweils einer Achse 37, 38, die in einem Lager 39, 40 gelagert ist. Die Achse 37 des Scharniers 35 ist drehfest mit dem Paneel 4 verbunden, und die Achse 38 des Scharniers 36 mit dem Paneel 5. Die Lager 39, 40 sind an dem Paneel 5 bzw. 4 befestigt.

Damit sind beispielsweise von den beiden benachbarten Paneelen 4 und 5, die über das Scharniergelenk 12 miteinander verbunden sind, die obere Seilscheibe 25 drehfest mit dem Paneel 4 und die untere Seilscheibe 25' drehfest mit dem Paneel 5 verbunden.

Der in Figur 1 durch die Pfeile 15 bis 19 dargestellte Antrieb zum Auffalten der Paneele 3 bis 7 kann, wie in Figur 2 dargestellt, durch Triebfedern 42, 43 gebildet sein, die einerseits an der Achse 37 bzw. 38 der Scharniere 35, 36 und andererseits an dem Paneel 5 bzw. 4 befestigt sind. Erfindungsgemäß sind die geraden Abschnitte der endlosen Seile, wie anhand des Seiles 32 in Figur 2 gezeigt, außerhalb der Seilscheiben 25, 26 mit einem Kunststoffmantel 47, 48 versehen. Um die Biegsamkeit im Bereich der Seilscheiben 25, 26 nicht zu beeinträchtigen, kann, was in der Zeichnung nicht dargestellt ist, das Drahtseil 32 in diesem Bereich abschnittsweise mit einem Kunststoffmantel versehen sein.

Der Kunststoffmantel 47, ist, wie in Figur 3 dargestellt, mit Verstärkungsfasern 50 versehen, die überwiegend parallel zur Längsachse des Drahtseiles 32 verlaufen. An seinem Ende 49 ist der Kunststoffmantel 47 konisch verjüngt. Das andere, in Figur 3 nicht dargestellte Ende, des Kunststoffmantels 47 ist in gleicher Weise verjüngt ausgebildet.

## Patentansprüche

1. Getriebe zur Bewegung von an einem Raumfahrzeug mit Scharniergelenken ziehharmonikaartig gefalteten, mit Solarzellen versehenen Paneelen, mit Seilscheiben an jedem Scharniergelenk, die mit der einen Paneele drehfest und mit der benachbarten drehbar verbunden sind, wobei jeweils zwei benachbarte Seilscheiben von einem endlosen Drahtseil umschlungen werden, das mit ihm drehfest verbunden ist, dadurch gekennzeichnet, daß das Drahtseil (29 bis 33) zur Anpassung seiner Längenänderung bei Temperaturänderung an die Längenänderung der Paneele (3 bis 7) und zur Erhöhung seiner Dehnsteifigkeit ausserhalb des Bereichs der Seilscheiben (22 bis 27; 25', 26') mit einem mit ihm fest verbundenen Kunststoffmantel (47, 48) versehen ist.

2. Getriebe nach Anspruch 1, dadurch gekennzeichnet, daß der Kunststoffmantel (47, 48) faserverstärkt ausgebildet ist.

3. Getriebe nach Anspruch 1 oder 2, dadurch gekennzeichnet, daß die Längenänderung des Drahtseiles (29 bis 33) bei Temperaturänderung durch den Wärmeausdehnungskoeffizienten und die Querschnittsfläche des Kunststoffmantels (47, 48) an die Längenänderung der Paneele (3 bis 7) angepasst ist.

4. Getriebe nach Anspruch 2 oder 3, dadurch gekennzeichnet, daß die Längenänderung des Drahtseiles (29 bis 33) bei Temperaturänderung durch den Winkel der Verstärkungsfasern (50) gegenüber der Drahtseillängsachse an die Längenänderung der Paneele (3 bis 7) angepasst ist.

5. Getriebe nach einem der vorhergehenden Ansprüche, dadurch gekennzeichnet, daß die Dehnsteifigkeit der mit dem Kunststoffmantel (47, 48) versehenen Seilabschnitte durch die Querschnittsfläche und den Elastizitätsmodul des Kunststoffmantels (47, 48) einstellbar ist.

6. Scheibe nach Anspruch 2, dadurch gekennzeichnet, daß die Dehnsteifigkeit der mit den Kunststoffmantel (47, 48) versehenen Seilabschnitte durch den Winkel der Verstärkungsfasern (50) gegenüber der Drahtseillängsachse einstellbar ist.

7. Getriebe nach einem der vorhergehenden Ansprüche, dadurch gekennzeichnet, daß die Dehnsteifigkeit der mit dem Kunststoffmantel (47, 48) versehenen Seilabschnitte wenigstens das Doppelte der Dehnsteifigkeit des Drahtseiles beträgt.

8. Getriebe nach einem der vorhergehenden Ansprüche, dadurch gekennzeichnet, daß der Kunststoffmantel (47, 48) an seinen Enden eine Verjüngung (49) aufweist.

9. Getriebe nach Anspruch 2, dadurch gekennzeichnet, daß die Verstärkungsfasern (50) durch Kohlefasern gebildet sind.

10. Getriebe nach einem der vorhergehenden Ansprüche, dadurch gekennzeichnet, dass das Drahtseil (29 bis 33) abschnittsweise mit einem Kunststoffmantel bedeckt ist, um die Biegsamkeit im Bereich der Seilscheiben (22 bis 27) nicht zu beeinträchtigen
